# EUROPEAN PATENT APPLICATION

(11) **EP 1 637 906 A1**
(43) Date of publication of application: **22.03.2006**
(21) Application number: 05255605.7
(22) Date of filing: 14.09.2005
(51) Int. Cl.: G02B 6/12

(54) **Optical chip interlayer optical connector**

(30) Priority: 20.09.2004 US 945278
(71) Applicant: LUCENT TECHNOLOGIES INC., Murray Hill, New Jersey 07974-0636 (US)
(72) Inventor: Madsen, Christi Kay, South Plainfield New Jersey 07080 (US)
(74) Representative: Sarup, David Alexander

(57) **Abstract**

Light is coupled between two or more layers of light guides in an optical chip (100) at a desired connection point by interconnecting the light guides (105,109) of each layer at the desired connection point using an "optical via" (107). The optical via (107) is located between the light guides (105,109) being connected in the layer that otherwise operates to insulate the layers containing the light guides (105,109). Such an optical via (107) may be made of a material that has an index of refraction that is conducive to optically coupling between the light guides. The geometry of the interconnection at the optical via (107) is arranged so that the light traveling in one of the light guides (105,109) reimages itself across the optical via (107) and continues traveling in the other of the light guides (105,109), for instance when the overlapping portion of the light guides (105,109) and the optical via operates as a multimode wave guide.

## Description

### Technical Field

This invention relates to optical chips, and more particularly, to optical chips with multiple layers of light guides, wherein light from a light guide in one layer needs to be connected to a light guide in another layer.

### Background of the Invention

Optical chips have various light guides for routing light. The light guides may simply carry the light, such light guides being typically single mode light guides, or they may be arranged to perform particular functions, in which case they are typically not single mode.

Prior art optical chips typically have only a single layer containing light guides, i.e., the transport of the light is limited to such a layer. There have been some optical chips that have multiple layers containing light guides. However, the functionality of such chips has been limited by the difficulty of transporting light from one layer to the other.

In some such prior art chips, the intermediate layer between the layers in which the light guides are located are made thin enough so that when a light guide in one layer crossed with a light guide in another layer, the light from the first layer was able to couple to the second layer. Disadvantageously, such optical chips had to be laid out so that the light guides in one layer only crossed with the light guides of the other layer when it was desired that the light couple from one layer to the other. As a result, there was a considerable limitation of the possible designs.

In other such prior art chips, the width of the light guides were reduced adiabatically in the vicinity of the point at which it was desired that the light would pass from one layer to the other. In order to achieve reasonable coupling of the light, it was necessary to reduce the width over a length on the order of hundreds of microns. Disadvantageously, doing so reduced the potential density of light guides on such optical chips. Further disadvantageously, doing so expanded the mode of the light into the cladding material, creating a risk that the light will cross into the substrate or couple to other layers in an undesired manner. As a result, a larger cladding area was required, thus further reduced the potential density.

### Summary of the Invention

I have recognized that light may be coupled between two or more layers at a desired connection point by interconnecting the light guides at each layer at the desired connection point using what I call an "optical via". The optical via is located between the light guides being connected in the layer that otherwise operates to optically insulate the layers containing the light guides.

Such an optical via may be made of a material that has an index of refraction that is conducive to optically coupling between the light guides. For example, the index of refraction of such a material may be substantially the same as that of the light guides that it is interconnecting. One exemplary such material, when the light guides are single crystalline silicon or polysilicon, which have substantially the same index of refraction, is polysilicon. In one exemplary embodiment of the invention, the light guides of the first layer are crystalline silicon, the light guides of the second light guide are polysilicon, and the vias are, in a sense, an extension of the polysilicon wave guides. Alternatively, the index of refraction of the optical via material may differ greatly from the index of refraction of the light guides that the optical via is interconnecting. Furthermore, different optical materials may be employed to make up a single optical via. In such a case, the weighted average of the index of refraction of the employed materials, based, for example, on percentage of materials in the via, may be effectively the index of refraction for that optical via. For any embodiment of the invention, the index of refraction of the via needs to be greater than that of the cladding, so that the light is guided. Preferably, but not necessarily, the index of refraction is close to that of at least one of the light guides.

Furthermore, in accordance with an aspect of the invention, the geometry of the interconnection at the optical via is arranged so that not only does the optical via operate, when combined with the overlapping portions of the single mode light guides, as a multimode wave guide, but also, the overlapping portions of the single mode light guides operate as multimode light guides. Such multimode operation allows the light traveling in one of the light guides to reimage itself across the optical via and continue traveling in the other of the light guides.

Advantageously, using such vias, the coupling of light between layers is controllable, so that the light guides of the various layers may be freely overlapped, while at the same time smaller dimensions may be employed. Such advantages are achieved because there is no need for a gradual taper. Also, since the mode of the light is not being expanded into the cladding material, the risk that the light will cross into the substrate at a crossing point is minimized. Thus, greater design freedom and denser devices may be achieved.

### Brief Description of the Drawing

In the drawing:
FIG. 1 shows a cross sectional view through some of the light guides of an exemplary optical chip having light guides on at least two different layers, at least one pair of the light guides being interconnected by an optical via in accordance with the principles of the invention;
FIG. 2 shows another cross-section of the optical chip of FIG. 1;
FIG. 3 shows a flowchart of an exemplary process for determining the height and length of an optical via given the height of the single mode light guides to be coupled by the optical via;
FIG. 4 shows an outline of an exemplary process for fabricating light guides on two levels and at least one optical via between them, in accordance with the principles of the invention;
FIG. 5 shows a cross-section of another optical chip having light guides on at least two different layers that are connected by at least one optical via, in accordance with the principles of the invention;
FIG. 6 shows a cross-section of another optical chip having light guides on at least two different layers that are connected by at least one optical via, in accordance with the principles of the invention; and
FIG. 7 shows a cross-section another optical chip having light guides on at least three different layers that are connected by at least one optical via, in accordance with the principles of the invention.

### Detailed Description

The following merely illustrates the principles of the invention. It will thus be appreciated that those skilled in the art will be able to devise various arrangements that, although not explicitly described or shown herein, embody the principles of the invention and are included within its spirit and scope. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that any block diagrams herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable medium and so executed by a computer or processor, whether or not such computer or processor is explicitly shown.

In the claims hereof any element expressed as a means for performing a specified function is intended to encompass any way of performing that function. This may include, for example, a) a combination of electrical or mechanical elements which performs that function or b) software in any form, including, therefore, firmware, microcode or the like, combined with appropriate circuitry for executing that software to perform the function, as well as mechanical elements coupled to software controlled circuitry, if any. The invention as defined by such claims resides in the fact that the functionalities provided by the various recited means are combined and brought together in the manner which the claims call for. Applicant thus regards any means which can provide those functionalities as equivalent as those shown herein.

Unless otherwise explicitly specified herein, the drawings are not drawn to scale.

In the description, identically numbered components within different ones of the FIGs. refer to the same components.

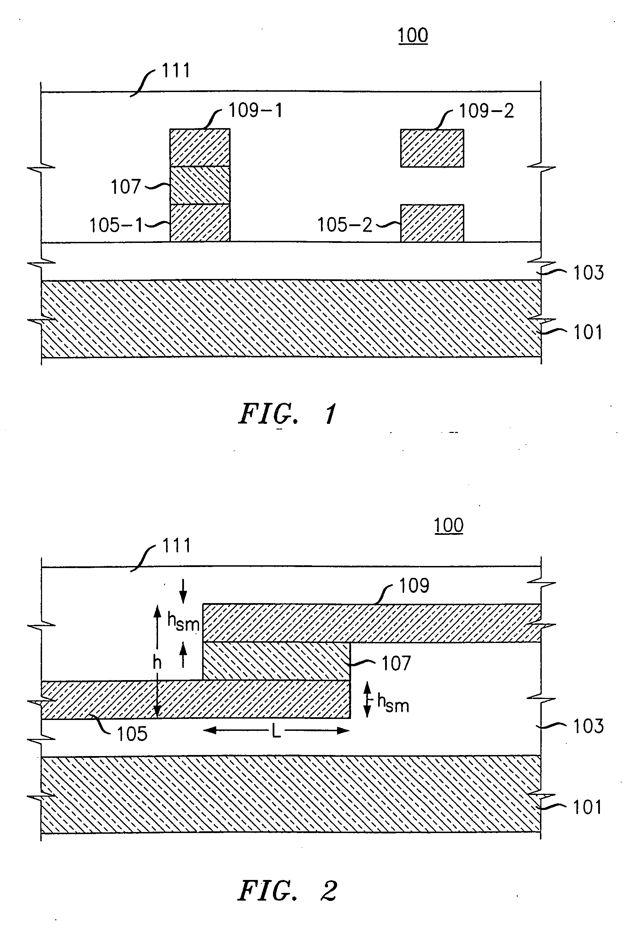

FIG. 1 shows a cross sectional view through some of the light guides of an exemplary optical chip 100 having light guides on at least two different layers, at least one pair of the light guides being interconnected by an optical via in accordance with the principles of the invention. The light guides in FIG. 1 are perpendicular to the plane of the page. Shown in FIG. 1 are a) silicon substrate 101; b) first cladding, e.g., SiO₂, layer 103; c) first-layer light guides 105, including first-layer light guides 105-1 and 105-2; d) optical via 107; e) second-layer light guides 109, including second-layer light guides 109-1 and 109-2; and f) second cladding, e.g., SiO₂, layer 111. Typically, in accordance with the principles of the invention, optical via 107 couples light from first-layer light guide 105-1 to second-layer light guide 109-1. Also, typically, first-layer light guides 105 and second-layer light guides 109 are single mode light guides. Optical via 107 is located between the light guides being connected in the layer that operates to insulate the layers containing the light guides. Note that only a single representative via 107 is shown, any number may be implemented, as required by the particular application.

In accordance with an aspect of the invention, optical via 107 is made of a material that has an index of refraction that is conducive to optically coupling between the light guides. For example, the index of refraction of such a material may be substantially the same as that of the light guides that it is interconnecting.

One exemplary material for optical via 107, when light guides 105 and 109 are single crystalline silicon or polysilicon, which have substantially the same index of refraction, is polysilicon. In one exemplary embodiment of the invention, when light guides 105 are crystalline silicon, second light guides 109 are polysilicon, vias 107 are also polysilicon. In such an embodiment of the invention, vias 107 may appear to be a vertical extension of second light guides 109 between which they couple light. Such an arrangement may be useful where particularized crystal growth techniques are used to build optical chip 100.

When light guides 105 and 109 are silicon nitride (SiN), optical vias 107 may likewise be SiN. Other exemplary materials that may be used for the light guides or optical vias include germanium and silicon germanium (SiGe). Note that the concentrations of each material in a combination material may be changed along the path of the light, including along the border with, or within, one of optical vias 107. Those of ordinary skill in the art will readily be able to develop various arrangements of light guides and vias that are suitable to different applications.

Furthermore, in accordance with an aspect of the invention, the geometry of optical via 107 is arranged so that when combined with overlapping portions of first-layer light guides 105 light and second-layer light guides 109 operates as a multimode wave guide. Such a multimode wave guide allows the light traveling in one of first-layer light guides 105 light or second-layer light guides 109 to reimage itself across optical via 107 and continue traveling in the other of first-layer light guides 105 light or second-layer light guides 109.

FIG. 2 shows another cross-section of optical chip 100 having light guides on at least two different layers. The cross-section shown in FIG. 2 is such that one can see the path that light traveling in optical chip 100 would take. More specifically, light traveling from left to right in first-layer light guide 105 would encounter optical via 107 near the end of the travel path within first-layer light guide 105. Due to the substantial matching of the index of refraction between first-layer light guide 105 and optical via 107, as well as the correct geometry at the interfaces between the light guides and the via, as well as the correct geometry of the via itself, the light within first-layer light guide 105 travels up into optical via 107. The light traveling up optical via 107 then encounters second-layer light guide 109, in which it is reimaged, and the light then continues traveling from left to right in second-layer light guide 109

One of ordinary skill in the art will readily appreciate, given the general teaching in the art as well the specific teaching of Optical Multi-Mode Interference Devices Based on Self-Imaging: Principles and Applications, by Lucas B. Soldano and Erik C.M. Pennings published in the Journal of Lightwave Technology, Vol. 13, No. 4, April 1995, pp. 615-627, the electromagnetic equations and properties of light that operate to allow light to reimage itself and thereby travel up from first-layer light guide 105 into optical via 107. The teaching therein is for in-plane travel only. However, I have realized that the same type of mode excitation taught therein can be employed to explain the basis for the coupling of light out of the plane as disclosed herein.

Advantageously, using such optical vias, the coupling of light between layers is controllable, so that the light guides of the various layers may be freely overlapped. Further advantageously, smaller dimensions than were previously possible with prior art arrangements may be employed, because the need in the prior art for a gradual taper of the light guides is eliminated. Also, since the mode of the light is not being expanded into the cladding material, the risk that the light will cross into the substrate at a crossing point is minimized. Thus, greater design freedom and more dense devices may be achieved.

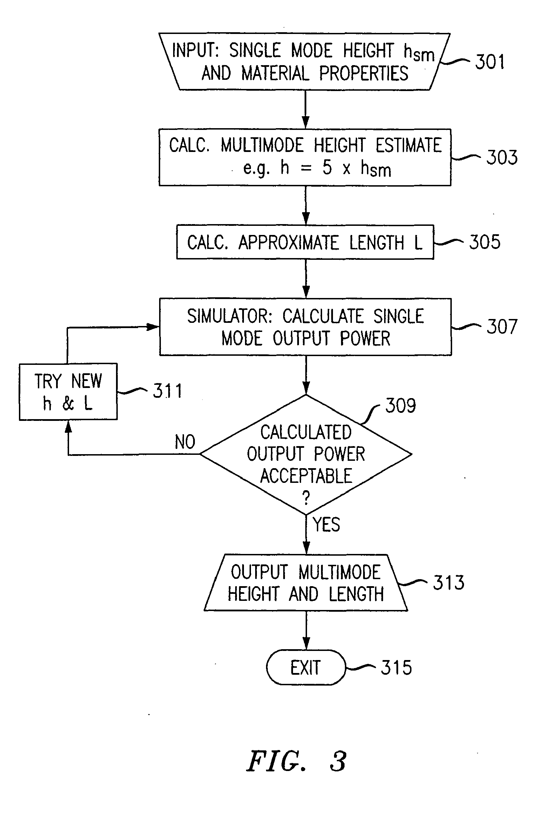

FIG. 3 shows a flowchart of an exemplary process for determining the height and length of an optical via given the height of the single mode light guides to be coupled by the optical via. The process is entered in step in step 301, in which various parameters of the optical chip are supplied, including the height of the single mode light guides and the properties of the materials that are making up the light guides and the optical vias. In step 303 an initial guess of the height of the multimode region, h, is made, e.g., by multiplying the single mode height, hₛₘ, by a factor, e.g., 5. If the different layer light guides have different single mode heights, then the average of the single mode heights may be employed. The factor is such that light traveling in a waveguide with such a height would have multiple modes. Since self-imaging is best when the most modes are excited, 5 is a good choice for the factor because it balances the number of modes against the need to provide reasonable dimensions for such an optical device.

Next, in step 305, an estimate of the length, L, of the overlap between the light guides and the optical via is developed as a function of the initial guess and the index of refraction of the materials at the interface between the light guides and the optical via. In the event different materials are interfacing, an average of the index of refraction may be used, and suitable results may be achieved thereby. This estimate may be developed by computing L = (4nh²)/3λ where L is the length sought, n is the index of refraction, h is the initial guess for the height, and λ is the operating wavelength of interest.

Thereafter, starting in step 307 a commercial simulator of the modes of propagation is employed to refine the initial estimate. One such simulator is OlympIOs available from Concept to Volume B.V. (C2V) (http://www.c2v.nl). Such software is given necessary parameters such as the geometry of the light guides and the optical via, the initial guess of the height, the estimate of the length, and the material properties and it returns the optical fields and, of particular interest, the power output, e.g., the power that is coupled into the second single mode light guide. Thus, more particularly, in step 307, the simulator determines the single mode output power given the currently prescribed parameters.

Thereafter, conditional branch point 309 tests to determine if the output power determined by the simulator is acceptable. Since it is typically desirable to have all of the input power supplied as output power, the acceptable output power will be some prescribed percentage of the input power, e.g., 99%.

The particular output power that is acceptable in any application may be specified by the implementer. If the test result in step 309 is NO, indicating that the output power is not acceptable, control passes to step 311, in which new values for h and L are developed, e.g., as perturbations of the current values. Such perturbations may be small increases or decreases in the values. Those of ordinary skill in the art will readily recognize how to adjust h and L in small increments over various executions of step 311 to cover the reasonable possible ranges for h and L. If the test result in step 309 is YES, indicating the output power is acceptable control passes to step 313, and the current values for h and L are employed. The process then exits in step 315.

In the event that the entire reasonable ranges for h and L have been tested, but no acceptable value for the output power is found, the implementer has the option of selecting the values of h and L for the best power found.

Those of ordinary skill in the art will readily be able to adapt the method shown in FIG. 3 to applications where the light guides do not have the same geometry. For example the average height of the two light guides being coupled may be employed in place of the single height mentioned in FIG. 3.

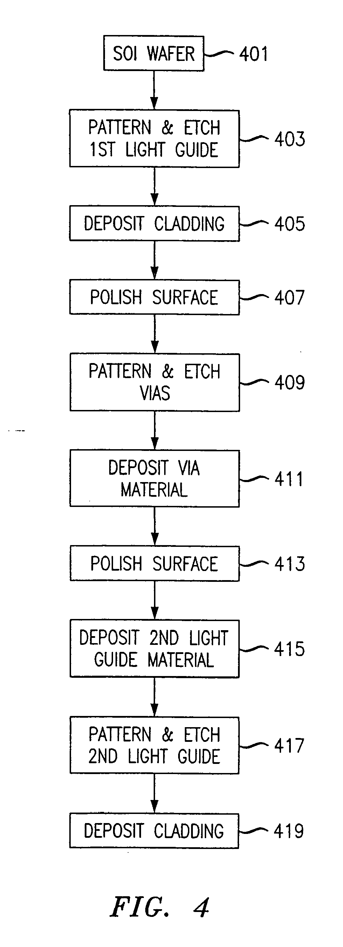

FIG. 4 shows an outline of an exemplary process for fabricating light guides on two levels and at least one optical via between them, in accordance with the principles of the invention. The process begins in step 401 with a conventional silicon on insulator wafer. In step 403, a first layer of light guides is made in the conventional manner by patterning the desired structure and etch away all the silicon material that was deposited on the insulator of the SOI wafer that is not desired to remain in the first wave guide layer, e.g., the layer in which first light guides 105 (FIG. 1) exist. Thereafter, in step 405, a cladding layer, e.g., a layer of SiO₂, which acts to optically insulate the first and second layer of light guides, is deposited over the first layer of light guides. The resulting layer has its exposed surface polished flat, e.g., using the well-known chemical-mechanical polishing (CMP) techniques in step 407. In step 409 the locations at which optical vias are desired is patterned on the now flat surface of the SiO₂, so that an etch, also performed as part of step 409, removes only the SiO₂ that covers the light guides of the first layer at the location at which connections are desired to the second layer. In step 411, a layer of material having an index of refraction that is conducive to optically coupling between the light guides, is conformally coated over the etch surface, so that the material fills the holes left by the preceding etch process, as well as coating the unetched portions of the wafer. The resulting layer has its exposed surface polished flat down to the height of the already-deposited cladding layer, e.g., again using the well-known chemical-mechanical polishing (CMP) techniques, in step 413. In step 415 a layer of material to be formed into the second light guides is deposited on the now flat surface of the cladding layer. Finally, the light guides of the second layer are patterned on the material to form the second layer of light guides, and then etched to form the second layer of light guides in step 417. A final layer of cladding is deposited over the second layer of light guides in step 419. Note that, depending on the layout, the first layer of cladding may meet and be continuous with the second layer of cladding.

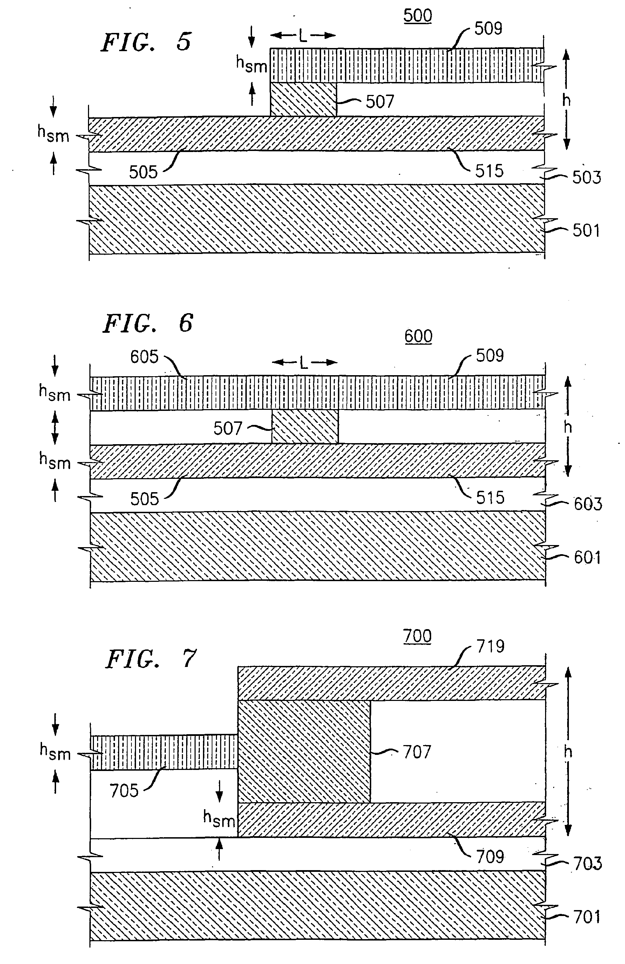

FIG. 5 shows a cross-section of optical chip 500 having light guides on at least two different layers that are connected by at least one optical via, in accordance with the principles of the invention. The view in FIG. 5 is similar to that shown in FIG. 2. In FIG. 5, optical via 507 acts to create not only a connection from light guide 505 to a light guide 509, but also to create a connection from light guide 505 to light guide 515. This is achieved by adjusting the length L of via 507 so that it produces two images as output. For example, the length may be made one half of what would have been used for the same arrangement in FIG. 2. However, the conservation of power will limit each of the resulting images to a maximum of only one half of the power of the original input image from light guide 505. Furthermore, optical chip 500 can operate in the reverse direction as a coupler, coupling the signals from light guides 509 and 515 into light guide 505.

FIG. 6 shows a cross-section of optical chip 600 having light guides on at least two different layers that are connected by at least one optical via, in accordance with the principles of the invention. The view in FIG. 6 is similar to that shown in FIG. 5. As in FIG. 5, optical via 507 acts to create not only a connection from light guide 505 to a light guide 509, but also to create a connection from light guide 505 to light guide 515. This is achieved by adjusting the length L of via 507 so that it produces two images as output. For example, the length may be made one half of what would have been used for the same arrangement in FIG. 2. However, the conservation of power will limit each of the resulting images to a maximum of only one half of the power of the original input image from light guide 505.

Additionally, optical via 507 acts to create a connection from light guide 515 to light guides 505 and 605 for light traveling from right to left in light guide 515. Similarly, optical via 507 acts to create a connection from light guide 509 to light guides 505 and 605 for light traveling from right to left in light guide 509.

Furthermore, optical chip 600 can operate in the reverse direction as a coupler, coupling the signals from light guides 509 and 515 simultaneously into light guides 505 and 605. It can also simultaneously couple light from light guides 505 and 605 into light guides 509 and 515.

FIG. 7 shows a cross-section of optical chip 700 having light guides on at least three different layers that are connected by at least one optical via, in accordance with the principles of the invention. The view in FIG. 7 is similar to that shown in FIG. 2. In FIG. 7, optical via 707 acts to create not only a connection from light guide 705 to light guide 709, but also to create a connection from light guide 705 to light guide 719 in a third layer. This is achieved by selecting the length L and the height h of via 707 so that it produces two images as output. However, the conservation of power will limit each of the resulting images to a maximum of only one half of the power of the original input image from light guide 705. Furthermore, optical chip 700 can operate in the reverse direction as a coupler, coupling the signals from light guides 709 and 719 into light guide 705.

## Claims

1. An optical chip having at least one light guide on at least each of at least two different layers, said optical chip comprising at least one optical via comprising a material that has an index of refraction that is conducive to optically coupling light between said light guides of said at least two different layers.

2. The invention as defined in claim 1 wherein said optical via is an extension of at least one of said light guides in one of said layers.

3. The invention as defined in claim 1 said index of refraction of such a material is substantially the same as that of the light guides that it is interconnecting.

4. The invention as defined in claim 1 wherein said material is one from the group consisting of: crystalline silicon, polysilicon, silicon nitride (SiN) germanium, and silicon germanium (SiGe)

5. The invention as defined in claim 1 wherein the material making up at least one of said light guides is not substantially uniform throughout the region of overlap with said optical via.

6. The invention as defined in claim 1 wherein at least one of said light guides of said first layer are comprised of crystalline silicon and at least one of said light guides of said second layer are comprised of polysilicon

7. The invention as defined in claim 1 wherein said optical via operates as a multimode light guide.

8. The invention as defined in claim 1 wherein said light guides are single mode light guides.

9. The invention as defined in claim 1 wherein at least one of said light guides is a single mode light guide that operates as a multimode light guide in the region of overlap with said optical via.

10. A method of operating an optical chip comprising:
a first light guide at a first level; and
a second light guide at a second level;
the method comprising the step of:
reimaging at least a portion of light traveling in said first light guide into said second light guide at an optical via between said first and second light guides.
